# EUROPEAN PATENT SPECIFICATION

(11) **EP 4 418 164 B1**
(45) Date of publication and mention of the grant of the patent: **18.11.2026**
(21) Application number: 24186608.6
(22) Date of filing: 22.12.2016
(51) Int. Cl.: G06V 20/69, G06N 3/045, G06V 10/82

(54) **PROCESSING CELL IMAGES USING NEURAL NETWORKS**
VERARBEITUNG VON ZELLBILDERN MIT NEURENALEN NETZWERKEN
TRAITEMENT DES IMAGES DE CELLULES AVEC DES RÉSEAUX DE NEURONES

(30) Priority: 26.02.2016 US 201615055446
(43) Date of publication of application: 21.08.2024
(62) Document number(s) of the earlier application(s) in accordance with Art. 76 EPC: 16825981.0 / 3 420 495
(73) Proprietor: GOOGLE LLC, Mountain View CA 94043 (US)
(72) Inventor: NELSON, Philip Charles, Mountain View, CA 94043 (US); CHRISTIANSEN, Eric Martin, Mountain View, CA 94043 (US); BERNDL, Marc, Mountain View, CA 94043 (US); FRUMKIN, Michael, Mountain View, CA 94043 (US)
(74) Representative: Marks & Clerk GST

(56) References cited:
- WO-A1-2015/177268
- WO-A1-2015/195609
- US-A1- 2014 270 457
- WEIDI XIE ET AL: "Microscopy cell counting and detection with fully convolutional regression networks", COMPUTER METHODS IN BIOMECHANICS AND BIOMEDICAL ENGINEERING: IMAGING & VISUALIZATION, vol. 6, no. 3, August 2015 (2015-08-01), GB, pages 283 - 292, XP055551869, ISSN: 2168-1163, DOI: 10.1080/21681163.2016.1149104
- HYEONWOO NOH ET AL: "Learning Deconvolution Network for Semantic Segmentation", ARXIV, December 2015 (2015-12-01), pages 1520 - 1528, XP055558488, ISBN: 978-1-4673-8391-2, DOI: 10.1109/ICCV.2015.178

## Description

### BACKGROUND

This specification relates to a neural network for processing images of biological cells.

Neural networks are machine learning models that employ one or more layers of models to generate an output, e.g., one or more classifications, for a received input. Some neural networks include one or more hidden layers in addition to an output layer. The output of each hidden layer is used as input to the next layer in the network, i.e., the next hidden layer or the output layer of the network. Each layer of the network generates an output from a received input in accordance with current values of a respective set of parameters.

Existing methods of processing cells include manually washing the cells with fluorescent markers to generate stained cells. From the stained cells, scientists can manually identify characteristics of the cells.

In a paper entitled "Microscopy cell counting and detection with fully convolutional regression networks" (Weidi, Xie et al., Computer Methods in Biomechanics and Biomedical Engineering: Imaging and Visualization, Volume 6, No. 3, August 2015, pages 283 - 292), the authors propose automated cell counting and detection in microscopy images.

In a paper entitled "Learning Deconvolution Network for Semantic Segmentation" (Noh, Hyeonwoo et al., ARXIV, December 2015, pages 1520 - 1528), the authors propose a semantic segmentation algorithm by learning a deconvolution network. The deconvolution network is composed of deconvolution and unpooling layers, which identify pixel-wise class labels and predict segmentation masks.

WO2015195609A1 proposes a method for analyzing digital holographic microscopy (DHM) data for hematology applications. The method includes receiving a plurality of DHM images acquired using a digital holographic microscopy system.

WO2015177268A1 proposes systems and computer-implemented methods for automatic immune cell detection that is of assistance in clinical immune profile studies. The automatic immune cell detection method involves retrieving a plurality of image channels from a multi-channel image such as an RGB image or biologically meaningful unmixed image. A cell detector is trained to identify the immune cells by a convolutional neural network in one or multiple image channels. Further, the automatic immune cell detection algorithm involves utilizing a non-maximum suppression algorithm to obtain the immune cell coordinates from a probability map of immune cell presence possibility generated from the convolutional neural network classifier.

### SUMMARY

In general, this specification describes a neural network for processing cell images.

In particular, a system obtains data that includes an input image of one or more biological cells illuminated with an optical microscopy technique.

The system processes the data using a stained cell neural network. The stained cell neural network is a deep neural network that has been configured through training to receive the data and to process the data to generate one or more stained cell images. Each stained cell image depicts a respective stained version of the one or more biological cells in the input image.

Particular embodiments of the subject matter described in this specification can be implemented so as to realize one or more of the following advantages.

A stained cell neural network can predict a stained cell image from an image of a cell and a cell characteristic neural network can predict characteristics of the cell from the stained cell image. Therefore, characteristics of the cell can be predicted from the image of the cell using automated processes, which can reduce cost and testing time. That is, the characteristics of the cell can be predicted without having to physically stain a live cell, which reduces the number of live cells that need to be modified to determine the characteristics of the cell. In particular, a stained image of a live cell can be generated without physically staining and possibly killing the cell. These stained images can then be used to determine characteristics of the cell. Additionally, generating stained images using a neural network is more efficient and requires fewer resources and less time than physically staining a cell to generate a stained image. Moreover, the neural network can be configured to stain for any number of channels simultaneously, whereas physical protocols can only stain for a small number of channels simultaneously.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 illustrates an example system for processing cell images.
FIG. 2 is a flow diagram of an example process for processing an image of one or more cells to identify features of the one or more cells.
FIG. 3 is a flow diagram of an example process for training a stained cell neural network.
FIG. 4 is a flow diagram of an example process for training a cell characteristic neural network.

Like reference numbers and designations in the various drawings indicate like elements.

### DETAILED DESCRIPTION

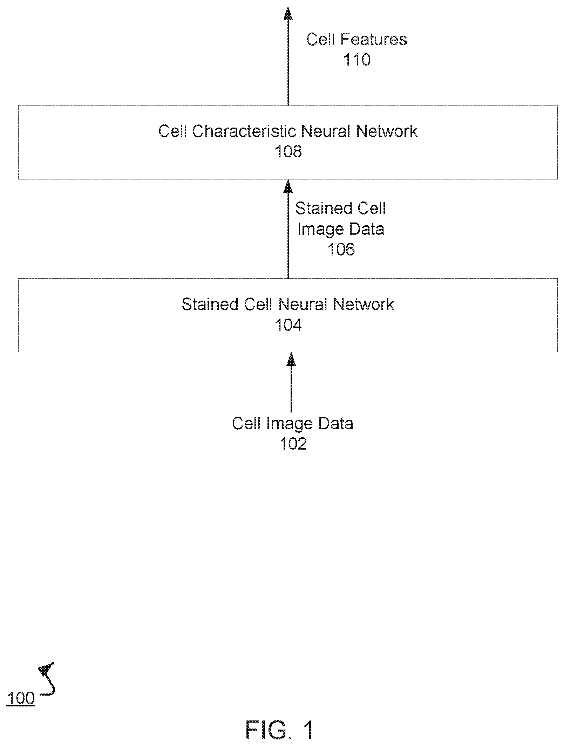

FIG. 1 illustrates an example system 100 for processing cell images. The system 100 is an example of a system implemented as computer programs on one or more computers in one or more locations, in which the systems, components, and techniques described below can be implemented.

The system 100 includes a stained cell neural network 104. The stained cell neural network 104 is a neural network that is configured to process cell image data 102 to generate stained cell image data 106. The cell image data 102 can include one or more images of one or more biological cells taken by a microscopic camera. The stained cell image data 106 includes images predicting what the cells in the cell image data 102 would look like if the cells were stained.

Cell staining is a technique that is used to visualize biological cells, e.g., using a microscope, by applying a stain to the cells. After application, different stains can cause various components of the cells to display visual markers, e.g., to change color from their original color to a different color. Example components of a cell which may display visual markers due to the cell being stained with a particular stain include the nucleus or the cell membranes of the cell. Some cell staining techniques are performed on living cells while other staining techniques can be performed on non-living cells. For example, one cell staining technique is to immerse a sample of cells in a dye solution and then to rinse and capture an image of the sample under a microscope. After staining the cells, scientists can visually analyze the cells or the stained images of the cells to determine characteristics of the cells.

In some implementations, the stained cell neural network 104 is trained to generate multiple types of stained cell images from a given input cell image. Each stained cell image corresponds to a different type of stain. For example, predicted stain images can be of stains generated using *in vivo* staining or *in vitro* staining. By way of illustration, one stained cell image can be a predicted image of the one or more cells being stained with a crystal violet stain. Other stained cell images can be of various fluorescent channels of the cell image.

In particular, the stained cell neural network 104 receives, as input, data including pixels of a cell image. When generating a stained image, the stained cell neural network 104 generates, for each input pixel of the cell image, a respective output pixel. The output pixels for each cell image form a respective stained cell image. Thus, the stained cell neural network 104 implements a fully convolutional image-to-image regression. An example neural network architecture that can be used for the stained cell neural network 104 is described in "Learning Deconvolution Network for Semantic Segmentation," Hyeonwoo Noh, Seunghoon Hong, and Bohyung Han, accessible at http://arxiv.org/abs/1505.04366.

The system 100 also includes a cell characteristic neural network 108. The cell characteristic neural network 108 is configured to process stained cell image data 106 generated by the stained cell neural network 104 to generate cell features 110 of the one or more cells in the cell image data 102. The cell features 110 characterize features of the one or more cells in the cell image data 102. For example, the cell features 110 can indicate one or more of: a cell type, health, provenance or condition, state of differentiation in induced pluripotent stem cell protocols, or a count of the cells. For example, for each input image, the cell characteristic neural network 108 can generate a feature vector of outputs, with each feature corresponding to a respective portion of the outputs in the feature vector.

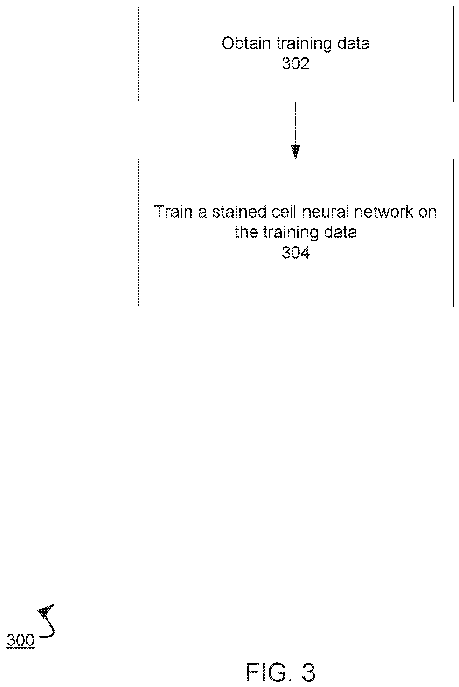

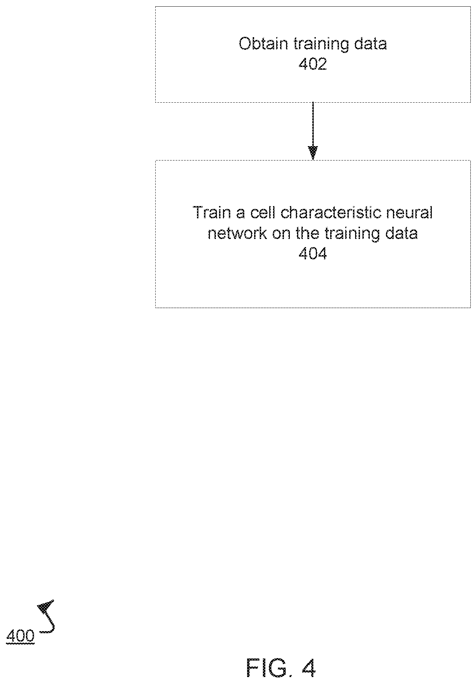

To configure the neural networks 104 and 108 to generate the stained cell image data 106 and the cell features 110, the system 100 can train the neural networks 104 and 108 on training data, which will be described further below with reference to FIGS. 3 and 4.

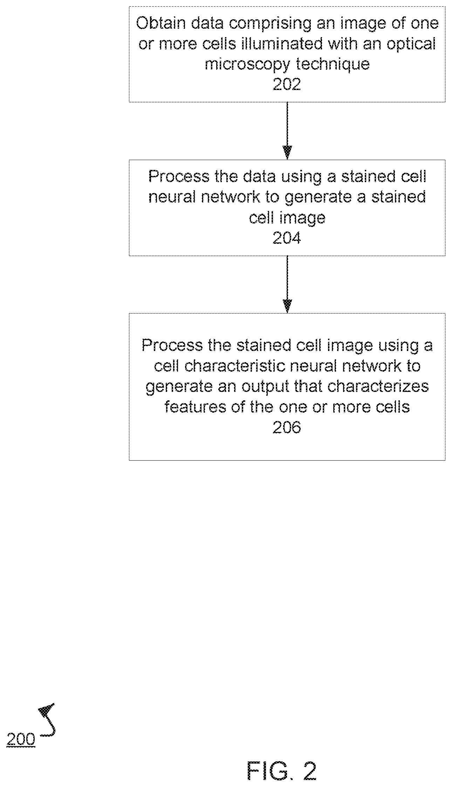

FIG. 2 is a flow diagram of an example process 200 for processing an image of one or more cells to identify features of the one or more cells. For convenience, the process 200 will be described with respect to a system, e.g., the system 100 of FIG. 1, having one or more computing devices that execute software to implement the process 200.

The system obtains data including one or more images of one or more cells illuminated with an optical microscopy technique (step 202).

For example, in the one or more images, the cells can be illuminated by differential interference contrast microscopy, red light microscopy, or ultraviolet light microscopy. In some implementations, each image of the one or more cells is foveated. In some implementations, the data includes multiple images, each illuminated by a different microscopy technique.

In some implementations, the data includes a set of images of varying focus. That is, each image focuses at a different depth point of the one or more cells, and the different depth points in the set of images span the entire structure of the one or more cells. The images can be taken by a high resolution camera.

The system processes the data using a stained cell neural network, e.g., the stained cell neural network 104 of FIG. 1, to generate one or more stained cell images (step 204).

The stained cell neural network is a neural network that has been configured through training to receive data including one or more images of one or more cells and to process the one or more images to generate one or more stained cell images. Training the stained cell neural network will be described further below with reference to FIG. 3.

In implementations where the data includes a set of images of varying focus, the neural network includes multiple independent towers of neural network layers, an intermediate combining layer that combines the output of each tower to generate a combined output, and one or more additional neural network layers that process the combined output to generate the stained cell images. In these implementations, the system groups the set of images into multiple image groups, with each group corresponding to a respective one of the towers. The system then processes each group using the corresponding tower. In some cases, each group includes a single image from the set of input images. In some other cases, one or more of the groups can include multiple images, with the input to the corresponding tower being a multi-dimensional tensor, e.g., a stack of the images in the group.

The system processes the one or more stained cell images using a cell characteristic neural network, e.g., the cell characteristic neural network 108 of FIG. 1, to generate an output that characterizes features of the one or more cells (step 206).

The cell characteristic neural network is a neural network that has been configured through training to receive one or more stained cell images that depict what one or more cells would look like if stained and to generate an output that characterizes features of the one or more cells that are depicted in the stained cell images.

For example, the cell characteristic neural network may be configured to output a feature vector that includes multiple output values. Each feature that the neural network is configured to characterize can correspond to a respective portion of the output values in the feature vector. For example, the features can indicate one or more of: a cell type, health, provenance or condition, state of differentiation in induced pluripotent stem cell protocols, or a count of the cells. As one example, a predetermined one of the output values in the feature vector can represent a predicted count of the number of cells in the input image while the portion that corresponds to the cell type feature can include multiple values that each correspond to a respective type of cell. The value that corresponds to a given cell type may represent a likelihood that the cells in the image are of that type.

Training the cell characteristic neural network will be described further below with reference to FIG. 4.

FIG. 3 is a flow diagram of an example process 300 for training a stained cell neural network. For convenience, the process 300 will be described with respect to a system, e.g., the system 100 of FIG. 1, having one or more computing devices that execute software to implement the process 300.

The system obtains training data for the stained cell neural network (step 302). The training data includes multiple training examples, with each training example including one or more images of one or more cells, and, for each training example, one or more corresponding stained images. In some cases, for each training example, the corresponding stained images can depict the cells being stained with a variety of stains.

The system trains the stained cell neural network on the training data (step 304). To train the stained cell neural network, the system processes the image in each training example using the stained cell neural network to generate one or more stained cell images. Generally, each stained cell image corresponds to a different stain. The system then determines, for each pixel of each stained cell image, an error between the pixel values generated by the stained cell neural network and the pixel values in the corresponding stained cell image in the training data.

In some implementations, the stained images may comprise images of cells that are stained with substances that target specific cellular compartments or structures. For example, some of the stains may be ones that stain the nucleus specifically, whilst others may bind to components of the cell cytoskeleton or one or more cell membranes, including the outer cell membrane and/or other ones of the intracellular membranes. By training the stained cell neural network on such images, it may be possible for the stained cell neural network to come to identify the parts of a particular cell that are likely to be stained by these different substances. The stained cell neural network can in turn learn to generate images that reflect what these cells would look like in the event that the stains were applied to the cells.

The system uses the error to update values of the parameters used in each layer of the stained cell neural network using conventional neural network training techniques, e.g., stochastic gradient descent with backpropagation.

FIG. 4 is a flow diagram of an example process 400 for training a cell characteristic neural network. For convenience, the process 400 will be described with respect to a system, e.g., the system 100 of FIG. 1, having one or more computing devices that execute software to implement the process 400.

The system obtains training data for the cell characteristic neural network (step 402). The training data includes multiple training images, where each training example is an image of one or more stained cells, and for each training image, a corresponding feature vector. In particular, the corresponding feature vectors include outputs corresponding to each feature that the cell characteristic neural network is configured to predict.

In some implementations, the system receives training data that includes images of unstained cells and then processes the images using the trained stained cell neural network to generate the training images that will be used as training data for the cell characteristic neural network.

The system trains the cell characteristic neural network on the training data (step 404). That is, the system processes each training image using the cell characteristic neural network to determine a predicted feature vector for the training image. The system then determines an error between the predicted feature vector for the training image and the feature vector corresponding to the training image in the training data and uses the error to update values of the parameters used in each layer of the cell characteristic neural network using conventional neural network training techniques.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) monitor, an LCD (liquid crystal display) monitor, or an OLED display, for displaying information to the user, as well as input devices for providing input to the computer, e.g., a keyboard, a mouse, or a presence sensitive display or other surface. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending resources to and receiving resources from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

The scope of protection of the present invention is provided by the appended claims.

## Claims

1. A method for processing one or more images of biological cells, the method comprising:
obtaining input data comprising one or more images of one or more biological cells, wherein each image is an image of the one or more biological cells illuminated with a respective microscopy technique;
processing the input data comprising the one or more images using a convolutional neural network, wherein the convolutional neural network has been configured through training to receive the input data comprising the one or more images of the one or more biological cells and to process respective pixels of the one or more images of the input data to perform fully convolutional image-to-image regression from the input data to one or more output stained cell images of the one or more biological cells, and to predict a plurality of fluorescent channels of the one or more output stained cell images, wherein each pixel in each of the plurality of fluorescent channels generated by the convolutional neural network corresponds to a respective pixel of the one or more images in the input data; and
providing the one or more output stained cell images with the predicted plurality of fluorescent channels.

2. The method of claim 1, wherein the microscopy techniques include: differential interference contrast microscopy, red light microscopy, and ultraviolet light microscopy.

3. The method of claim 1, wherein different images in the one or more images have different focal points.

4. The method of claim 1, further comprising:
processing the one or more output stained cell images using a cell characteristic neural network, wherein the cell characteristic neural network has been configured through training to generate a cell characteristic output that characterizes features of the biological cells.

5. The method of claim 4, wherein the cell characteristic output comprises data
characterizing one or more of a cell type, a cell health, a cell population, a cell phenotype, or a cell state of differentiation in induced pluripotent stem cell protocols of the one or more biological cells.

6. The method of claim 4, wherein the cell characteristic output specifies an average cell health or a percentage of cells that have correctly differentiated through induced pluripotent stem cell protocols.

7. The method of claim 4, wherein the cell characteristic output specifies a cell condition for each biological cell of the one or more biological cells.

8. A system comprising one or more computers and one or more storage devices storing instructions that when executed by the one or more computers cause the one or more computers to perform a method according to any one of the preceding claims.

9. One or more non-transitory storage media storing instructions that when executed by one or more computers cause the one or more computers to perform operations according to any one of claims 1 to 7.

## Patentansprüche

1. Verfahren zum Verarbeiten eines oder mehrerer Bilder von biologischen Zellen, wobei das Verfahren Folgendes umfasst:
Erhalten von Eingabedaten, umfassend ein oder mehrere Bilder einer oder mehrerer biologischen Zellen, wobei jedes Bild ein Bild der einen oder mehreren biologischen Zellen ist, die mit einer jeweiligen Mikroskopietechnik beleuchtet werden;
Verarbeiten der Eingabedaten, die das eine oder die mehreren Bilder umfassen, unter Verwendung eines neuronalen Faltungsnetzwerks, wobei das neuronale Faltungsnetzwerk durch Training konfiguriert wurde, um die Eingabedaten, die das eine oder die mehreren Bilder der einen oder mehreren biologischen Zellen umfassen, zu empfangen und jeweilige Pixel der einen oder mehreren Bilder der Eingabedaten zu verarbeiten, um eine vollständige Bild-zu-Bild-Faltungsregression von den Eingabedaten in ein oder mehrere ausgegebene, eingefärbte Zellbilder der einen oder mehreren biologischen Zellen durchzuführen und eine Mehrzahl von Fluoreszenzkanälen des einen oder der mehreren ausgegebenen, eingefärbten Zellbilder vorherzusagen, wobei jedes Pixel in jedem der Mehrzahl von durch das neuronale Faltungsnetzwerk generierten Fluoreszenzkanälen einem jeweiligen Pixel des einen oder der mehreren Bilder in den Eingabedaten entspricht; und
Bereitstellen des einen oder der mehreren ausgegebenen, eingefärbten Zellbilder mit der vorhergesagten Mehrzahl von Fluoreszenzkanälen.

2. Verfahren nach Anspruch 1, wobei die Mikroskopietechniken Folgendes beinhalten: differenzielle Interferenzkontrastmikroskopie, Rotlichtmikroskopie und Ultraviolettlichtmikroskopie.

3. Verfahren nach Anspruch 1, wobei unterschiedliche Bilder in dem einen oder den mehreren Bildern unterschiedliche Brennpunkte aufweisen.

4. Verfahren nach Anspruch 1, ferner umfassend:
Verarbeiten des einen oder der mehreren ausgegebenen, eingefärbten Zellbilder unter Verwendung eines neuronalen Netzwerks für Zellmerkmale, wobei das neuronale Netzwerk für Zellmerkmale durch Training konfiguriert wurde, um eine Zellmerkmalsausgabe zu generieren, die Merkmale der biologischen Zellen charakterisiert.

5. Verfahren nach Anspruch 4, wobei die Zellmerkmalsausgabe Daten umfasst
die eines oder mehrere von einer Zellart, einer Zellgesundheit, einer Zellpopulation, einem Zellphänotyp oder einem Zelldifferenzierungszustand in Protokollen für induzierte pluripotente Stammzellen der einen oder mehreren biologischen Zellen charakterisieren.

6. Verfahren nach Anspruch 4, wobei die Zellmerkmalsausgabe eine durchschnittliche Zellgesundheit oder einen Prozentsatz von Zellen definiert, die sich durch Protokolle für induzierte pluripotente Stammzellen korrekt differenziert haben.

7. Verfahren nach Anspruch 4, wobei die Zellmerkmalsausgabe einen Zellzustand für jede biologische Zelle der einen oder mehreren biologischen Zellen definiert.

8. System, umfassend einen oder mehrere Computer und eine oder mehrere Speichervorrichtungen, die Anweisungen speichern, die bei Ausführung durch den einen oder die mehreren Computer den einen oder die mehreren Computer dazu veranlassen, ein Verfahren nach einem der vorhergehenden Ansprüche durchzuführen.

9. Ein oder mehrere nichttransitorische Speichermedien, die Anweisungen speichern, die bei Ausführung durch einen oder mehrere Computer den einen oder die mehreren Computer dazu veranlassen, Vorgänge nach einem der Ansprüche 1 bis 7 durchzuführen.

## Revendications

1. Procédé de traitement d'une ou plusieurs images de cellules biologiques, le procédé comprenant :
l'obtention de données d'entrée comprenant une ou plusieurs images d'une ou plusieurs cellules biologiques, dans lequel chaque image est une image des une ou plusieurs cellules biologiques éclairées avec une technique de microscopie respective ;
le traitement des données d'entrée comprenant les une ou plusieurs images à l'aide d'un réseau de neurones convolutif, dans lequel le réseau de neurones convolutif a été configuré par apprentissage pour recevoir les données d'entrée comprenant les une ou plusieurs images des une ou plusieurs cellules biologiques et pour traiter des pixels respectifs des une ou plusieurs images des données d'entrée pour réaliser une régression image à image entièrement convolutive depuis les données d'entrée vers une ou plusieurs images de cellules colorées de sortie des une ou plusieurs cellules biologiques, et pour prédire une pluralité de canaux fluorescents des une ou plusieurs images de cellules colorées de sortie, dans lequel chaque pixel dans chacun de la pluralité de canaux fluorescents générés par le réseau de neurones convolutif correspond à un pixel respectif des une ou plusieurs images dans les données d'entrée ; et
la fourniture des une ou plusieurs images de cellules colorées de sortie avec la pluralité de canaux fluorescents prédits.

2. Procédé selon la revendication 1, dans lequel les techniques de microscopie comportent : une microscopie à contraste interférentiel différentiel, une microscopie à lumière rouge et une microscopie à lumière ultraviolette.

3. Procédé selon la revendication 1, dans lequel différentes images dans les une ou plusieurs images ont des points focaux différents.

4. Procédé selon la revendication 1, comprenant en outre :
le traitement des une ou plusieurs images de cellules colorées de sortie à l'aide d'un réseau de neurones de caractéristique cellulaire, dans lequel le réseau de neurones de caractéristique cellulaire a été configuré par apprentissage pour générer une sortie de caractéristique cellulaire qui caractérise des caractéristiques des cellules biologiques.

5. Procédé selon la revendication 4, dans lequel la sortie de caractéristique cellulaire comprend des données
caractérisant un ou plusieurs éléments parmi un type cellulaire, une santé cellulaire, une population cellulaire, un phénotype cellulaire ou un état de différenciation cellulaire dans des protocoles de cellules souches pluripotentes induites des une ou plusieurs cellules biologiques.

6. Procédé selon la revendication 4, dans lequel la sortie de caractéristique cellulaire spécifie une santé cellulaire moyenne ou un pourcentage de cellules qui se sont correctement différenciées grâce à des protocoles de cellules souches pluripotentes induites.

7. Procédé selon la revendication 4, dans lequel la sortie de caractéristique cellulaire spécifie un état cellulaire pour chaque cellule biologique des une ou plusieurs cellules biologiques.

8. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser un procédé selon l'une quelconque des revendications précédentes.

9. Un ou plusieurs supports de stockage non transitoires stockant des instructions qui, lorsqu'elles sont exécutées par un ou plusieurs ordinateurs, amènent les un ou plusieurs ordinateurs à réaliser des opérations selon l'une quelconque des revendications 1 à 7.
